# EUROPÄISCHE PATENTSCHRIFT

(11) **EP 2 217 056 B1**
(45) Veröffentlichungstag und Bekanntmachung des Hinweises auf die Patenterteilung: **13.02.2013**
(21) Anmeldenummer: 08783484.2
(22) Anmeldetag: 16.09.2008
(51) Int. Cl.: A01J 5/10, A01J 5/007

(54) **PULSATORVORRICHTUNG**
PULSATOR DEVICE
DISPOSITIF PULSANT

(30) Priorität: 05.10.2007 CH 15492007
(43) Veröffentlichungstag der Anmeldung: 18.08.2010
(73) Patentinhaber: Bilgery, Erwin, 8590 Romanshorn (CH)
(72) Erfinder: KUMMER, Alfred, 8566 Lippoldswilen (CH); BILGERY, Erwin, 8590 Romanshorn (CH)
(74) Vertreter: Büchel, von Révy & Partner
(86) Internationale Anmeldenummer: PCT/CH2008/000384
(87) Internationale Veröffentlichungsnummer: WO 2009/043189

(56) Entgegenhaltungen:
- EP-A- 0 230 178
- WO-A-02/05629
- WO-A-92/12625
- WO-A-96/36211
- DE-A1- 19 614 377
- DE-A1-102006 056 185
- FR-A- 2 376 620
- GB-A- 622 541
- GB-A- 967 722
- US-A- 3 499 465

## Beschreibung

Die Erfindung betrifft eine Pulsatorvorrichtung für Melkmaschinen mit den Merkmalen des Anspruchs 1. Eine Vorrichtung mit den Merkmalen des Oberbegriffs des Anspruchs 1 ist aus EP 02 30178 bekannt.

In Milchproduktionsbetrieben ist der Einsatz von Melkmaschinen unverzichtbar. Diese verfügen über ein Melkzeug mit auf das Euter abgestimmten Melkbechern mit Gummikappen, sog. Zitzengummis, die über je eine Zitze des Euters gestülpt werden. Danach beginnt die Melkmaschine, versorgt durch eine Vakuumpumpe und angetrieben von einer Pulsatorvorrichtung in einem bestimmten Takt bzw. im Wechsel an den Zitzen zu saugen und diese wieder zu entlasten. Wenn das Tier ausreichend stimuliert wurde, fliesst die Milch bis zu einem bestimmten Entleerungsgrad aus dem Euter ab. Die so entnommene Milch fliesst aus den Melkbechern über die Milchschläuche in den Milchabscheider und wird von dort in einen Kühltank gepumpt und bis zur Weiterverarbeitung gelagert. Bei Wahl der geeigneten Melkmaschine und bei passendem Melkzeug gestaltet sich das Melken für das Tier in der Regel schmerzfrei. Zu beachten ist dabei auch die sog. Laktationskurve. Diese beschreibt den Verlauf der Milchmenge des Milchviehs über mehrere Monate hinweg, sie lässt sich in mehrere, der Fachperson bekannte Phasen mit teilweise stark differierenden Milchmengen unterteilen.

Es sind mehrere unterschiedliche Melkverfahren bekannt. Am häufigsten werden jedoch das Gleichtakt- und Wechseltakt-Melkverfahren angewendet. Während beim Gleichtaktmelken alle Zitzengummis synchron pulsieren, erfolgt die Pulsierung beim Wechseltaktmelken paarweise alternierend. Darüber hinaus kann bei automatischen Melksystemen (sog. Melkrobotern) zitzenindividuell gemolken werden, d.h. jeder Zitze ist ein eigener Pulsator zugeordnet. Der Melkvorgang bzw. die Melkparameter wie beispielsweise das Verhältnis von Saug- und Entlastungsphase ebenso wie die Dauer sowie der Verlauf (Kurvenform) dieser einzelnen Phasen werden im Wesentlichen durch die Art und Funktionsweise des eingesetzten Pulsators und das zugehörige elektronische Steuergerät bestimmt. Es können dabei verschiedene Pulsatortypen unterschieden werden:
1. Pneumatisch gesteuerter Pulsator,
2. direktgesteuerter Ankerpulsator, bei dem ein Magnet den Anker in die Spule zieht und das Vakuum angelegt sowie in der Endstellung die Frischluftzufuhr abgesperrt wird,
3. Magnetventil mit servogesteuertem Sitz- oder Membranventil, und
4. Pulsator mit abrollender Schieberfunktion, wobei eine Membran über einer langen schmalen Einlass- bzw. Auslassöffnung für Vakuum und Frischluft auf- und abgerollt wird.

Nachteilig an den genannten (Elektro-)Pulsatoren ist, dass bei direkt- oder servogesteuerten Ventilen die Vakuumzufuhr und die Luftzufuhr während des Schaltvorganges einen kurzen Augenblick lang gleichzeitig offen sind, woraus mehrere nadelförmige Druckimpulse resultieren, welche ein unangenehmes Nebengeräusch erzeugen. Aufgrund der Masse des Ankers kommt es bei Letzteren zudem zur Emission von Körperschall. Im Fall der Membransysteme hingegen hat die Membran fast keine Masse, sodass die Bewegungsgeschwindigkeit dementsprechend höher ist und eine wesentlich höhere Druckwelle als beim direktgesteuerten Anker- bzw. beim pneumatischen Pulsator auftritt. In jedem Fall ist eine derartige Schwingung unangenehm für das Tier und wirkt sich negativ auf die Milchhergabe und somit die Melkleistung aus, woraus letztendlich eine schlechte Persistenz resultiert. Dauert der Stress für das Tier längere Zeit an, kann eine erhöhte Zellzahlausschüttung in die Milch und eine damit verbundene Mastitis auftreten, sodass die Milch schlimmstenfalls unter lebensmittelhygienischen Gesichtpunkten nicht mehr konsumtauglich ist.

Ein weiterer Nachteil pneumatisch gesteuerter Pulsatorsysteme ist ihre Temperaturabhängigkeit. So treten oftmals Unregelmässigkeiten in der Pulsfrequenz auf, die sich erst nach einer bestimmten Betriebszeit und dem Erreichen einer bestimmten Betriebstemperatur stabilisieren. Zudem verlangsamt ein niedriges Vakuum, beispielsweise beim gleichzeitigen Betrieb mehrerer Melkzeuge an einer Vakuumquelle, die Pulszahl. Die in den Membranpulsatoren verwendeten Membranen können zudem ungleichmässig altern, wodurch es ebenfalls zu Unregelmässigkeiten im Verhältnis von Saug- und Entlastungsphasen und namentlich zwischen den beiden Kanälen (Euterhälften) kommen kann.

Die Milch fliesst während der Saugphase aus der Zitze in den Melkbecher. Durch die angreifende Saugkraft werden aber auch Blut und Lymphflüssigkeit im Zitzengewebe, v.a. in Richtung der Zitzenspitze konzentriert. Dieser Vorgang hat zur Folge, dass die Umgebung des Zitzenkanals anschwillt und somit den Ausfluss der Milch behindert. Es wird daher in regelmässigen Abständen ein Massagetakt benötigt. Ein solcher Massagetakt folgt in der Regel jedem Saugtakt, wobei die Massage dadurch erzielt wird, dass atmosphärische Luft in den Pulsraum geleitet wird. Die unterschiedlichen Druckverhältnisse zwischen Zitzen- und Pulsraum bewirken dann eine mechanische Druckkraft, sodass der Zitzengummi auf die Zitze drückt und auf diese Weise das angestaute Blut wieder zurück nach oben drängt.

Nachteilig an dieser Vorgehensweise ist, dass die mechanische Massage oft mit zu hoher Druckkraft und ungleichmässig auf die Zitze wirkt, wobei die Zitzenspitzen am stärksten belastet werden. Es bilden sich dadurch weisse Flecken in diesen Zonen der Zitze aus, da das Blut hier vollständig verdrängt wird.

Die Einstellung der Pulszahl und das Verhältnis von Saug- und Entlastungsphase muss sich stark an der Tierrasse, der Euter- und Zitzenform sowie an der verlaufenen Laktation orientieren. Die vorgenannten Pulsatorsysteme, erfüllen die daraus resultierenden technischen Anforderungen nicht oder nur ungenügend und wirken sich nachteilig auf das Wohlbefinden der Kuh, deren Milchhergabe, deren Milchqualität und somit die Gesamtmelkleistung des Betriebes aus und verursachen dadurch zum Teil erhebliche finanzielle Einbussen für den Landwirt.

Um die oben geschilderten negativen Effekte herkömmlicher Pulsatoren abzumildern, schlägt die EP 0 230 178 einen Melkpulsator vor, der in einem Gehäuse mit einem Einlass für die Umgebungsluft, einem an eine Vakuumleitung angeschlossenen Einlass sowie wenigstens einem Auslass angeordnet ist und einen Verteiler aufweist, der im Gehäuse drehbar zwischen den Einlässen und dem Auslass angeordnet ist. Als Antrieb für die Drehbewegung des Verteilers ist ein Schrittmotor vorgesehen, der den Verteiler derart bewegt, sodass der Auslass wechselweise mit dem Lufteinlass bzw. mit der Vakuumleitung verbunden ist. Nachteilig an diesem Pulsator ist, dass während der Öffnungsphase eines Einlasses der gegenüberliegende Auslass offen ist. Es entsteht somit bei jedem Saug-Entlastungs-Takt eine offene Verbindung zwischen den beiden Kanälen und es fliesst Luft vom geöffneten in den öffnenden Kanal, was zu einem unerwünschten Vakuumeinbruch führt. Auch geschieht hier die Öffnung bzw. das Verschliessen der Kanäle schlagartig, woraus sehr hohe Beschleunigungswerte verbunden mit einer entsprechenden Schallemission resultieren, was für das gemolkene Tier nachweislich unangenehm ist.

Aufgabe der vorliegenden Erfindung ist es daher, eine Pulsatorvorrichtung zu schaffen, mit der ein schall- und druckemissionsfreies und damit tierschonendes Melken möglich ist und die gleichzeitig kostengünstig und besonders wartungsfreundlich ist.

Die Aufgabe wird gelöst durch eine Pulsatorvorrichtung gemäss Anspruch 1. Vorteilhafte Weiterbildungen der Erfindung sind Gegenstand der abhängigen Ansprüche.

Die erfindungsgemässe Pulsatorvorrichtung umfasst wenigstens einen ersten Einlass für Umgebungsluft, wenigstens einen zweiten Einlass für ein Vakuum, wenigstens einen Auslass, wenigstens einen Schrittmotor, eine Steuervorrichtung und wenigstens eine Rotationsscheibe mit einer Ausnehmung zur Freigabe des Einlasses und einer am Scheibenrand angeordneten, eine Steuerkante bildenden Ausfräsung zur Freigabe des Auslasses. Die Vorrichtung ist dadurch gekennzeichnet, dass die Ausnehmung als Ausbuchtung in der Oberfläche der Rotationsscheibe ausgebildet ist und die Ausbuchtung in Drehrichtung von der Ausfräsung beabstandet, angeordnet ist und die Steuerkante geschwungen, insbesondere nierenförmig ausgebildet ist. Mit einer entsprechenden Ausgestaltung des erfindungsgemässen Pulsatorsystems ist es möglich, die Bewegung der Rotationsscheibe kontrolliert durchzuführen, da durch den Schrittmotor eine gute Führbarkeit des Rotationskörpers erreicht werden kann. Zur Vermeidung einer hohen Beschleunigung des Druckverlaufes ist diese kontrollierte Beschleunigung zu Beginn der Evakuierungs- wie auch zu Beginn der Entlastungsphase besonders wichtig. Hinzu tritt, dass durch die geschwungene, insbesondere nierenförmige Ausgestaltung der Steuerkante der Rotationsscheibe ein nahezu linear verlaufender Anstieg des angelegten Vakuums bzw. dessen Abfall zu Beginn der Entlastungsphase erzielt werden kann.

Das somit mögliche kontinuierliche und vor allem kontrollierbare Öffnen bzw. Schliessen der Einlässe und des Auslasses führt dazu, dass weder aus der Öffnung der Einlässe noch aus der Öffnung des Auslasses eine Emission von nadelförmig darstellbaren Druckwellen resultiert. Im Verlauf einer positiven Überdeckung der Einlässe und des Auslasses durch die Rotationsscheibe, wird der Anschluss zur Pulsleitung von Vakuum und Zuluft abgesperrt. Dadurch kann der Luftzutritt in den Pulsraum begrenzt werden, wodurch ein geringerer Differenzdruck resultiert bzw. die Massagedruckkraft entsprechend verringert wird.

Diese Massnahmen verhindern im Weiteren die Anregung von Luft- und Körperschall. Unterstützt wird diese Präzision des Öffnungs- bzw. Schliessvorganges durch eine entsprechend hochaufgelöste Steuerung des Schrittmotors mit vielen Einzelschritten. Die Dimensionierung der Kanäle innerhalb der Rotationsscheibe hält dabei die Strömungsgeschwindigkeit so niedrig, dass keine störenden Turbulenzen bzw. Druckwellen auftreten können. Mit der erfindungsgemässen Ausgestaltung der Pulsatorvorrichtung wird somit die Melkbereitschaft der Kuh nicht gestört, was sich positiv auf eine gleichbleibend gute Milchhergabe auswirkt.

Weiter verbessert wird die Pulsatorvorrichtung dadurch, dass die Ventilbohrungen für Vakuum und Belüftung bei einem geringen Radius der Rotationsscheibe angeordnet sind. Mit dieser Anordnung wird erreicht, dass ein Einzelschritt des Schrittmotors eine nur minimale Bewegung der Rotationsscheibe und damit eine geringe Querschnittsänderung am Aus- bzw. Einlass bewirkt.

Bevorzugt weist die Pulsatorvorrichtung eine Anordnung des ersten und/oder zweiten Einlasses und/oder des Auslasses auf, die im Wesentlichen senkrecht zur Drehrichtung der Rotationsscheibe ausgerichtet ist. Durch diese Anordnung der luftführenden Ein- bzw. Auslässe sind diese strömungsgünstig ausgebildet. Mit der damit verbundenen günstigen Formgebung im Gehäuse und in der Rotationsscheibe wird das Aufkommen von Strömungsrauschen wirksam unterdrückt und die Geräuscharmut der Pulsatorvorrichtung weiter verbessert.

Eine als günstig angesehene Ausführungsform der Erfindung sieht vor, dass die Pulsatorvorrichtung eine Vorrichtung zur Ermittlung der Winkelstellung der Rotationsscheibe aufweist. Die Ermittlung der Winkelstellung kann dabei mit allen herkömmlichen Messverfahren erfolgen; aufgrund der besonders schwierigen Umgebungsbedingungen (Staub, Nässe, Korrosion) werden allerdings magnetische Winkelmesser bzw. elektrische Abnehmer oder Abtaster bevorzugt, die an oder in der Pulsatorvorrichtung bzw. dem umgebenden Gehäuse angeordnet sind.

Da die Steuerung der Pulsatorvorrichtung besonders genaue Informationen über die Position der Rotationsscheibe von der Mechanik benötigt, sieht eine bevorzugte Ausführungsform der Erfindung vor, dass eine entsprechende Vorrichtung zur Ermittlung der Winkelstellung, beispielsweise in Form einer automatisch ablesbaren Erkennungsfahne, direkt an und/oder in der Rotationsscheibe angeordnet ist. Der ermittelte Positionswert kann dann direkt an die Steuervorrichtung weitergeben werden, um mögliche Stellungsfehler zu erkennen und ggf. berichtigen zu können. Darüber hinaus lassen sich so auch Störungen im Bewegungsablauf der Rotationsscheibe schnell und sicher feststellen und beheben.

Bevorzugt weist die Steuervorrichtung der Pulsatorvorrichtung wenigstens ein Programm zur Steuerung der Rotationsscheibe auf. Das in der Steuervorrichtung hinterlegte Programm kann dabei auf Parameter, die beispielsweise für ein spezielles Tier, eine spezielle Melksituation oder eine standardisierte Euter-/Zitzenkonfiguration festgelegt wurden, zurückgreifen oder den Bewegungsablauf aus im Verlauf des Melkvorganges ermittelten Werten, beispielsweise für den zeitlichen Verlauf, die Vakuumstärke, den Milchfluss und die Stellung der Rotationsscheibe errechnen und die Rotationsscheibenbewegung und damit den Melkvorgang entsprechend anpassen. Ausgangspunkt für das entsprechende Bewegungsprofil ist dabei beispielsweise die Stellung der Rotationsscheibe, wenn diese über die Steuerkante beginnt, eine Verbindung zwischen Vakuum- oder Umgebungslufteinlass und dem Anschluss für die Pulsleitung herzustellen. Das Steuerprofil steuert dann die weitere Bewegung der Rotationsscheibe über die Drehzahl des Schrittmotors. In einem solchen Bewegungsprofil kann daher die Drehzahl des Antriebes ständig variieren oder sogar kurzzeitig die Drehrichtung ändern. Ebenfalls über die Steuerungsvorrichtung lässt sich eine automatische Stimulation (Anrüsten) nach dem Ansetzen des Melkzeugs steuern und auf das jeweils zu melkende Tier abstimmen. Eine sog. Stimopulsation kann dabei z. B. mit einer fünfmal höheren Pulsfrequenz (300 Pulse/min) als bei der Normalpulsierung üblich arbeiten. Durch die Konfiguration der Rotationsscheibe wird auch das Auftreten eines starken Nebenrauschens, das u.U. das Pulsvakuum zur Stimulation überlagert, vermieden.

Ebenfalls in den Ablauf des Steuerprogramms einfliessen können beispielsweise Daten über die aktuelle Temperatur und den aktuellen Luftdruck. Letzterer wird auch durch die Höhe des Milchproduktionsbetriebes über N.N. und von der Höhe des aktuellen Betriebsvakuums bestimmt. Aufgrund der Druckdifferenz würde daher ohne eine entsprechende Steuerung die anfängliche Druckwelle im Melkzeug in der Regel höher ausfallen als gewünscht. Daher ist die Steuerung aufgrund der vorher ermittelten Umweltwerte in der Lage, die Druckdifferenz stark abzuschwächen, indem die Rotationsscheibe zunächst nur einen schmalen Spalt des Einlasses für das Vakuum und auch für die Belüftung öffnet und dann für eine bestimmte Dauer wartet. Sobald die Druckdifferenz an der Steuer- bzw. Ventilkante unter einen kritischen Wert abgebaut ist, folgt ein weiteres Öffnen des Ventildurchganges und die Fortsetzung der begonnenen Evakuierungs- bzw. Belüftungsphase.

Eine weitere vorteilhafte Ausführungsform der Erfindung sieht vor, dass der Schrittmotor an der Rotationsscheibe mit einer Klauenkupplung angekoppelt ist. Durch die Ausführung mit einer Klauenkupplung wird zum einen eine besonders gute Führbarkeit der Rotationsscheibe erreicht, zum anderen ist eine entsprechende Kupplung besonders wartungsfreundlich und einfach austauschbar. Darüber hinaus ist eine Klauenkupplung konstruktiv in der Lage, einen Axialversatz bis zu einem gewissen Grad zu tolerieren.

Als empfehlenswert wird in diesem Zusammenhang angesehen, wenn der Angriffspunkt der Klauenkupplung am Umfang der Rotationsscheibe angeordnet ist. Dabei liegt der Angriffspunkt am grösstmöglichen Radius der Rotationsscheibe, wodurch zusätzlich das Winkelspiel der Vorrichtung tolerierbar niedrig gehalten und das Bauteil wenig beansprucht wird. Hierdurch lassen sich längere Wartungsintervalle für die Vorrichtung realisieren, was zu einer längeren Einsatzdauer und damit zu niedrigeren Betriebskosten beiträgt.

Günstigerweise sind an der Steuerung der Pulsatorvorrichtung Signaleingänge vorgesehen, an welchen Informationen von einer übergeordneten Steuerung eingelesen werden können wie z.B. Pulszahl, Pulsverhältnis oder auch den aktuellen Milchfluss sowie spezifische Daten aus dem Herdebuch. Mit diesen Informationen kann die Steuervorrichtung während des Melkvorganges die Drehzahl und Drehgeschwindigkeit der Rotationsscheibe laufend ideal an die besonderen Bedürfnisse des aktuell gemolkenen Tieres anpassen und dadurch den Melkvorgang möglichst kurz und stressarm für das Tier ablaufen lassen.

Als besonders günstig wird angesehen, wenn in der Pulsatorvorrichtung eine Rotationsscheibenstellung vorgesehen ist, mit der sich die gesamte Pulsatorvorrichtung schnell und ohne Beeinträchtigung des Tieres drucklos machen lässt. Diese Funktion ist besonders empfehlenswert, wenn die Pulsatorvorrichtung an Melkanlagen eingesetzt wird, die mit einer automatischen Melkzeugabnahmefunktion ausgestattet sind. Aus der jeweiligen Rotationsscheibenstellung am Ende des Melkvorganges errechnet die Steuerung die kürzestmögliche Drehbewegung bis zur vollständigen Öffnung des Einlasses für die Umgebungsluft und steuert dann über die Bewegung des Schrittmotors die Rotationsscheibe derart, dass ein Abbau des Vakuums zwar zügig, nicht jedoch schlagartig erfolgt, bevor die Abnahme ausgelöst wird.

Um die Luft- und Körperschallemission noch weiter zu senken, ist es weiterhin empfehlenswert, die Pulsatorvorrichtung in einem dem Pulsator zugeordneten Puffertank anzuordnen. Die Pulsatorvorrichtung befindet sich dann inmitten des Vakuums, wodurch sich noch günstigere Bedingungen für die Vakuumzufuhr einstellen. Mit dem Einsatz eines Puffertankes werden Emissionen von benachbarten Pulsatoren völlig abgeschottet. Darüber hinaus erweist es sich auch als günstig, die verwendete Rotationsscheibe aus einem reibungsarmen Kunststoff herzustellen. Hieraus ergeben sich neben einer verringerten Schallemission auch Vorteile hinsichtlich der Herstellungs- aber auch besonders der Wartungs- und Instandhaltungskosten, da eine entsprechende Rotationsscheibe weniger Verschleiss zeigt und daher seltener ausgetauscht werden muss. Neben einer aus einem Kunststoffvollmaterial bestehenden Rotationsscheibe ist es selbstverständlich auch denkbar, eine Scheibe aus einem herkömmlichen Material, beispielsweise aus Edelstahl, mit einem entsprechenden Kunststoffmaterial wie z. B. PTFE zu beschichten, um dadurch die Reibung herabzusetzen. Ein weiterer Vorteil einer Kunststoffrotationsscheibe ist deren Lebensmittelechtheit sowie die einfache Reinigung. Als besonders vorteilhaft zur Verminderung der Haftreibung erweist sich Keramik an der Oberfläche des Ventilblockes als ideale Materialpaarung.

Eine weitere vorteilhafte Ausführungsform der Erfindung sieht vor, dass mehrere derartige Pulsatorvorrichtungen in einem Gehäuse angeordnet sind. Hierdurch kann ein simultan, alternierend oder individuell arbeitendes Pulssystem erstellt werden, so dass am Melkzeug jede Zitze einzeln und völlig unabhängig, paarweise oder alle vier Zitzen gleichzeitig "besaugt" oder gleichzeitig "entlastet" werden können. Werden beispielsweise zwei oder vier erfindungsgemässe Pulsatorvorrichtungen in einem Gehäuse zusammengefasst, so weisen diese eine gemeinsame Steuervorrichtung für zwei oder vier autonom arbeitende Antriebsmotoren auf, die jeweils eine dem jeweiligen Motor zugeordnete Rotationsscheibe antreiben. Des weiteren weist das Gehäuse insgesamt pro eine Pulsatorvorrichtung je drei getrennte Anschlüsse auf, wovon ein Anschluss als Einlass für die Vakuumversorgung, ein weiterer Anschluss für die Umgebungsluft und ein Anschluss für den Pulsschlauch zum zugehörigen Melkzeug vorgesehen ist, an welchem ein oder zwei Zitzenbecher angeschlossen sind. Der Einlass für die Umgebungsluft kann dabei zusätzlich so ausgeführt werden, dass mit der einströmenden Luft eine Kühlung des Schrittmotors erfolgen kann.

Es erweist sich dabei als besonders vorteilhaft, wenn die Pulsatorvorrichtungen unabhängig steuerbar ausgebildet sind, da es üblich ist, dass die gemolkenen Tiere an der hinteren Euterpartie mehr Milch abgeben. Es ist daher sinnvoll, dass die Pulsatorvorrichtung mit unterschiedlichem Saugphasenverhältnis, angepasst an die vordere und hintere Euterhälfte arbeiten kann. Mit dieser Funktion wird eine gleichzeitige Entleerung des gesamten Euters erzielt, wodurch das Blindmelken reduziert wird und die Eutergesundheit erhalten bleibt.

Ein durch die erfindungsgemässe Pulsatorvorrichtung gesteuertes Melkverfahren umfasst eine Evakuierungsphase, während der eine Vakuumbeaufschlagung des Melkzeuges erfolgt, eine Haltephase während der eine Milchhergabe aus den Zitzen des gemolkenen Tieres erfolgt, sowie eine Belüftungsphase in der ein Abbau des anliegenden Vakuums durch in das Melkzeug einströmende Umgebungsluft erfolgt. Das Melkverfahren ist dabei dadurch gekennzeichnet, dass am Beginn der Evakuierungsphase die Beschleunigung der Vakuumzunahme geringer als 1000 kPa/s², und am Beginn der Belüftungsphase die Beschleunigung des Vakuumabbaues geringer als 1000 kPa/s² ist. Durch eine entsprechende Druckbeaufschlagung des Melkzeuges wird ein idealer und besonders tierfreundlicher Melkvorgang garantiert und eine wesentliche Verbesserung der Milchhergabe erzielt.

Bevorzugt wird im Melkverfahren die Vakuumzunahme während der Evakuierungsphase und der Vakuumabbau während der Belüftungsphase stabil gehalten. Es kommt somit zu keinem schlagartigen, mit Schallemission verbundenen Druckabfall verbunden mit einer unangenehmen Störung des gemolkenen Tiers sowie der Emission von Körperschall an der Pulsatorvorrichtung.

Günstigerweise setzt im Melkverfahren die Evakuierungsphase erst nach vollständigem Abschluss der Umgebungsluftzufuhr und/oder die Belüftungsphase erst nach vollständigem Abschluss der Vakuumzufuhr ein. Durch diese positive Überdeckung wird ebenfalls eine übermässige Schallemission während des Melkvorganges vermieden. Zudem wird verhindert, dass beim Einsetzen der Zitzenmassage während des Belüftungsvorganges eine übermässige Druckbeaufschlagung der Zitzen stattfindet und eine Störung der Durchblutung der Zitze erfolgt.

Die Evakuierungsphase und die Belüftungsphase weisen charakteristische, auf die jeweiligen Umweltbedingungen am Melkort sowie auf das jeweilige Tier abgestimmte Phasenverläufe auf. Es wird daher als besonders empfehlenswert angesehen, wenn während des Melkens eine Steuerung des Phasenverlaufs der Evakuierungsphase und/oder der Belüftungsphase durch oszillierende Bewegung der Rotationsscheibe durchgeführt wird. Die Steuerung des Phasenverlaufs erfolgt dabei bevorzugt durch die Steuervorrichtung.

Da im Verlauf des Melkvorganges die Milchhergabe variieren kann, wird es im Zusammenhang mit dem erfindungsgemässen Melkverfahren als besonders vorteilhaft erachtet, wenn während dem Melken die Steuerung des Phasenverlaufs in Anpassung an kontinuierlich ermittelte Parameter, wie beispielsweise die Milchmenge und das Luftvolumen im Pulsraum, erfolgt.

Als besonders vorteilhaft erweist sich das Verfolgen des Vakuumverlaufes in der Pulsleitung. Zum einen erhält die Steuerung eine Regelantwort zur aktuellen Position der Rotationsscheibe und zum anderen lässt sich der zeitliche Verlauf des produzierten Profiles bei der Evakuierung und ebenso bei der Belüftung bestimmen. Die gewonnenen Zeitinformationen geben Aufschluss über Veränderungen im Volumen des Pulsraumes.

Die Zitzenformen in einer Herde von Kühen können sehr unterschiedlich sein. Für das Melkzeug ist die Länge und der Durchmesser der Zitze von besonderer Bedeutung. Eine schlanke Zitze taucht tiefer in den Zitzengummi ein. Eine lange und zugleich schlanke Zitze kann sogar die ganze Länge des Zitzengummis beanspruchen.

Gegen Ende des Melkens nimmt der Innendruck der Milch in der Zitze allmählich ab, die Zitze wird dabei schlaff und taucht in der Folge tiefer in den Zitzengummi ein (Zitzenklettern).

In beiden Fällen wird das Volumen des Pulsraumes beeinflusst. Damit das vorgesehene Profil in der Evakuierungs- und Belüftungsphase stabil gehalten werden kann, ist es erforderlich, dass die Steuerung des Pulsators den Vakuumverlauf in der Pulsleitung kontinuierlich prüft und nach Bedarf die Position der Rotationsscheibe entsprechend korrigiert.

Wenn der Zeitpunkt vom Melkende vom Melker nicht rechtzeitig erkannt wird, dann setzt "Blindmelken" ein. Solche Arbeitsmängel sind für das Tier schmerzhaft und führen bald zu Euterentzündungen. Meist schlagen die Kühe gegen das Melkzeug, bis es zu Boden fällt (Störung der Vakuumstabilität, Hygiene).

Eine vorteilhafte Weiterbildung der Erfindung sieht vor, dass die Steuerung des Pulsators das bevorstehende Melkende jeder einzelnen Zitze oder Euterhälfte erkennt und optisch (Signallampe) oder mittels eines Steuersignals weiterleitet.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen Zeichnungen. Es zeigen:
- Fig.1 und 2: eine Darstellung der durch eine Ausführungsform der erfindungsgemässen Pulsatorvorrichtung erzielbaren Pulskurve im Verlauf des Melkvorganges,
- Fig.3 und 4: eine Schnittdarstellung des Ventilblocks der Pulsatorvorrichtung,
- Fig.5 und 6: eine Darstellung möglicher Arbeitspositionen der transparent gezeichneten Rotationsscheibe,
- Fig.7: eine Darstellung des Ventilblocks der Pulsatorvorrichtung in Draufsicht,
- Fig.8: die Schnittdarstellung einer Arbeitsposition der Rotationsscheibe in Ansicht von unten, und
- Fig.9: eine Darstellung der Rotationsscheibe in Draufsicht.

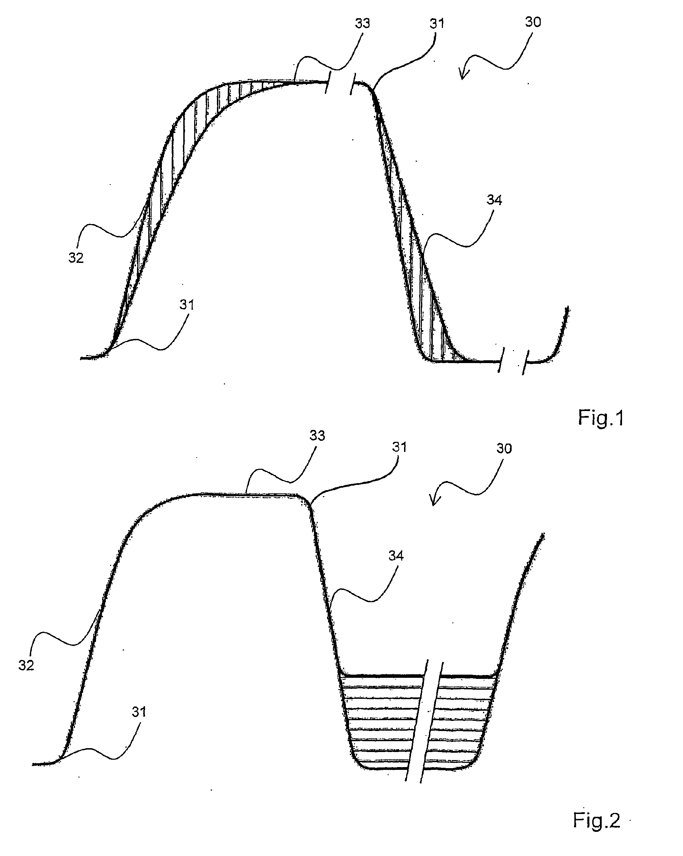

Die in Fig.1 und 2 dargestellte Pulskurve 30 weist insgesamt drei Bereiche auf. Zum einen umfasst die Pulskurve 30 eine kontrollierte Beschleunigungsphase 31 des Vakuumverlaufes am Beginn der nachfolgenden Evakuierungsphase 32, die durch einen zum Teil nichtlinearen Anstieg der Pulskurve 30 gekennzeichnet ist. Am Ende der Evakuierungsphase 32 geht die Pulskurve 30 nach einer Plateauphase 33 (nach Norm Phase B) in eine Belüftungsphase 34 über. Die Belüftungsphase beginnt mit einer kontrollierten Beschleunigung 31, die durch einen zum Teil nichtlinearen Abfall der Pulskurve 30 gekennzeichnet ist. Als Fortsetzung der Belüftungsphase 34 folgt die Massagephase (nach Norm Phase D). Schraffiert ist der Verlauf der Pulskurve 30 dargestellt, welcher durch die individuell auf den Betrieb bzw. das zu melkende Tier einstellbaren Evakuierungs- bzw. Belüftungsparameter beeinflussbar ist. Die entsprechende geometrische Gestaltung der luftführenden Ein- und Auslässe 13, 14 sowie der Rotationsscheibe 16 erlaubt dabei, dass auch bei relativ hoher Strömungsgeschwindigkeit der Luft, kein Rauschen auftreten kann, das auf das zu melkende Tier störend wirkt.

Während der Belüftungsphase 34 und der anschliessenden Druckphase D erfolgt gleichzeitig eine Massage der Zitzen zur Verbesserung der Milchhergabe.

Fig.2 zeigt durch einen begrenzten Vakuumabbau einstellbare Verläufe der Pulskurve 30 im Verlauf der Belüftungsphase 34, über die gleichzeitig eine Steuerung bzw. Verminderung des mechanischen Massagedruckes in der angrenzenden Druckphase D erfolgt.

Die in den Fig.1 und 2 dargestellten Verläufe der Pulskurve 30 erlauben eine Steuerung des Melkvorganges innerhalb idealer und tierfreundlicher Parameter, wodurch eine wesentliche Verbesserung der Milchhergabe erzielt werden kann.

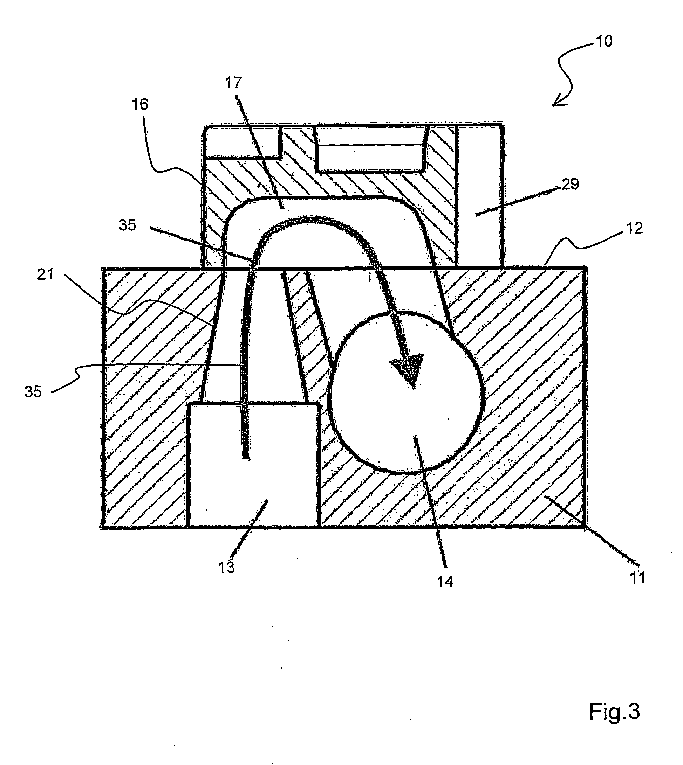

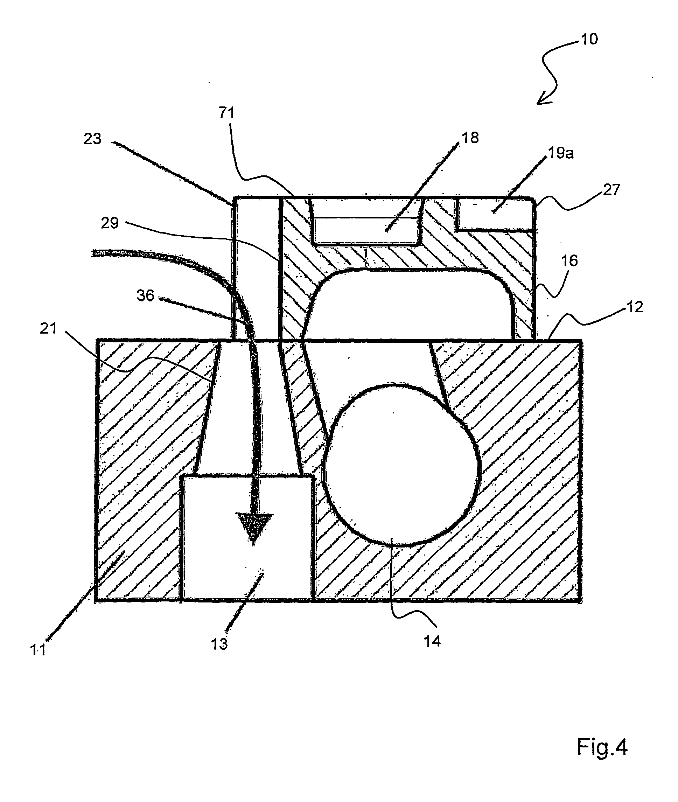

Die Fig.3 und 4 zeigen Schnittdarstellungen des Ventilblocks 11 der Pulsatorvorrichtung 10 mit jeweils auf der Oberseite 12 des Ventilblocks 11 drehbar angeordneter Rotationsscheibe 16. Nicht dargestellt wird der zum Antrieb der Vorrichtung verwendete Schrittmotor sowie die an der Rotationsscheibe 16 angeordnete Erkennungsfahne 20.

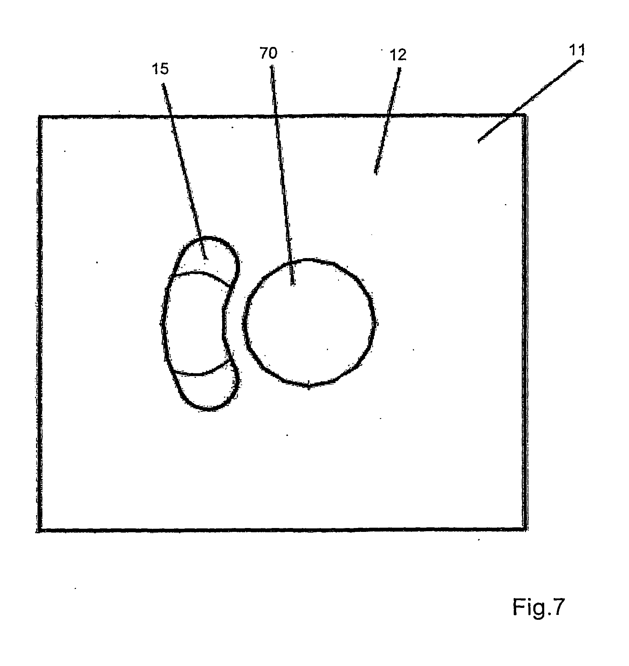

Der in Fig. 7 gezeigte Ventilblock 11 ist an der Oberfläche spiegelsymmetrisch ausgebildet. Die nierenförmig angeordnete Ventilbohrung 15 mündet in den trichterförmig ausgebildeten Verbindungskanal 21, welcher zum Anschlussstutzen 13 für den Pulsschlauch (Fig.3, 4) führt. Die Luft fliesst abhängig von der Stellung der ebenfalls spiegelsymmetrischen ausgebildeten Rotationsscheibe 16 in Richtung der Pfeile 35, 36 abwechselnd vom Melkzeug (Fig.3) oder zum Melkzeug (Fig.4). Zusätzlich ist im Ventilblock 11 ein zweiter Anschlussstutzen 14 vorgesehen, über den in Abhängigkeit von der Stellung der Rotationsscheibe 16 eine Verbindung bzw. Trennung des Melkzeuges von der Vakuumquelle durchgeführt wird.

In der in Fig.3 dargestellten Stellung der Rotationsscheibe 16 erfolgt die volle Vakuumbeaufschlagung des Melkzeuges und der Melkvorgang befindet sich in der Evakuierungsphase 32 bzw. Plateauphase. Die Luft strömt in Richtung des Pfeils 35 vom Melkzeug kommend durch den ersten Anschlussstutzen 13 in den trichterförmigen Verbindungskanal 21 und weiter zur nierenförmigen Ventilbohrung 15, durch den breiten Verbindungskanal 17 und über einen zweiten Anschlussstutzen 14 zu einer zentralen Vakuumversorgung.

Zur Erreichung des geforderten Profils in der Evakuierungsphase 32 wird nicht in jedem Falle der volle Querschnitt der nierenförmigen Ventilbohrung 15 verlangt. Gegen Ende der Evakuierungsphase 32 kann es notwendig werden, dass der Durchgangsquerschnitt der nierenförmigen Ventilbohrung 15 reduziert wird, damit kein Überschwingen der Pulskurve erfolgt. Abschliessend kann die nierenförmige Ventilbohrung 15 soweit geschlossen werden, dass der Luftdurchsatz nur noch der Leckagemenge im Melkzeug entspricht. Allfälliges Störungsaufkommen (Oberwellen) seitens der Vakuumversorgung gelangt so nicht mehr zum Melkzeug.

In Fig.4 wiederum ist die Rotationsscheibe 16 so positioniert, dass Frischluft ungehindert in Richtung des Pfeils 36 in das Melkzeug einströmen kann. Die Verbindung zur Vakuumversorgung ist hierbei zunächst vollständig unterbrochen. Der Melkprozess befindet sich somit in der Belüftungsphase 34 (vgl. Fig.1 und 2) und es findet eine Massage der bemolkenen Zitze(n) statt. Die Luft strömt unter atmosphärischem Druck von aussen in die nierenförmige Ventilbohrung 15, von dort durch den trichterförmigen Verbindungskanal 21 gebündelt zum Anschlussstutzen 13 und weiter durch den angeschlossenen Pulsschlauch zum Melkzeug. Zur Erreichung des geforderten Profils in der Belüftungsphase 34 wird nicht in jedem Falle der volle Querschnitt der nierenförmigen Ventilbohrung 15 verlangt. Gegen Ende der Belüftungsphase 34 kann es notwendig werden, dass der Durchgangsquerschnitt der nierenförmigen Ventilbohrung 15 reduziert wird, damit kein Unterschwingen der Pulskurve 30 erfolgt.

Alternativ ist es möglich, den Fortgang der Belüftungsphase 34 zu unterbrechen, indem die Rotationsscheibe 16 den Luftzutritt völlig abschliesst. Damit das Restvakuum auf einem definierten Niveau gehalten bleibt, wird die Verbindung zur Vakuumversorgung schrittweise geöffnet. In jedem Falle muss dabei die Rotationsscheibe 16 mit oszillierender Drehrichtung angetrieben werden, da in dieser Betriebsart sowohl beim Vakuum wie auch bei der Luftzufuhr niemals der volle Öffnungsquerschnitt erstellt werden darf. Somit kann ein stabiler Betrieb frei von Oberwellen erzielt werden.

Die in den Fig.3, 4, 5, 6, 8 und 9 gezeigte Rotationsscheibe 16 kann bidirektional betrieben werden. Eine entsprechende Steuerung des Antriebsmotors erfolgt über die der Pulsatorvorrichtung zugeordnete Steuerungsvorrichtung. Durch die gegenläufige Drehrichtung des bidirektionalen Antriebs der Rotationsscheibe 16 kann ein begrenzter Vakuumabbau, wie in Fig.2 dargestellt, durchgeführt werden.

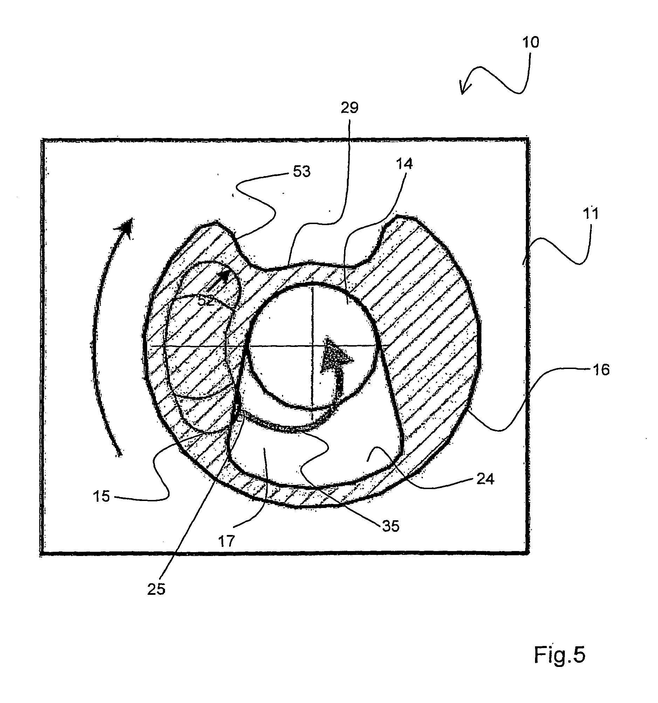

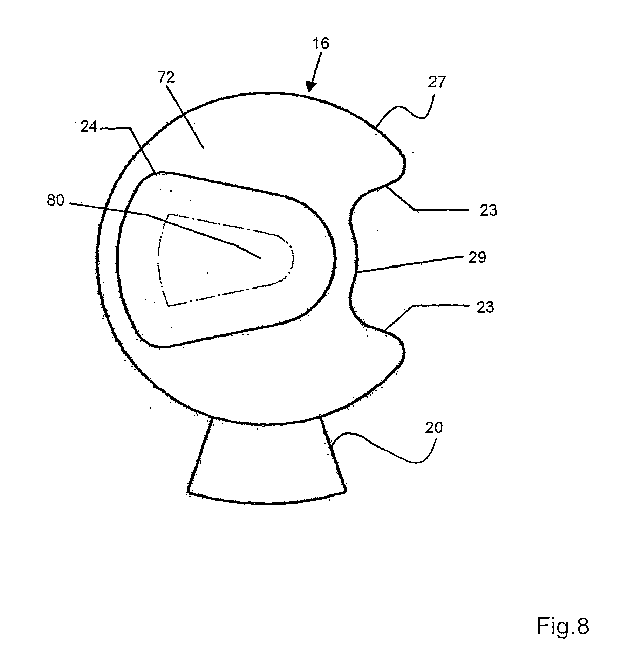

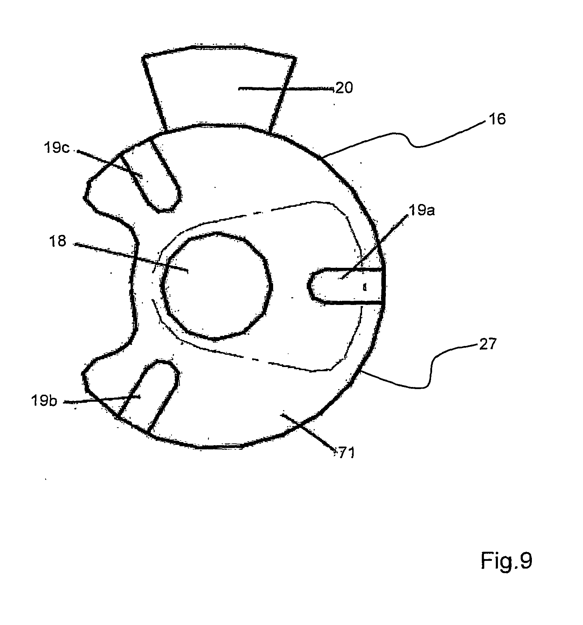

Die in den in Fig.3 und 4 gezeigten Vorrichtungen verwendete Rotationsscheibe 16 weist in ihrer vom Ventilblock abgewandten Oberfläche 71 (Fig.9) eine runde, zentral angeordnete Ausnehmung 18 zur Zentrierung des Drehachsenmittelpunktes auf. Am Umfang 27 der Rotationsscheibe 16 sind drei polar und gleichmässig verteilte Nuten 19a,19b,19c, angeordnet, in die Klauen einer Klauenkupplung eingreifen und mittels derer eine drehfeste Verbindung zwischen dem am Gehäuse angeordneten, in Fig.3 und 4 jedoch nicht dargestellten Schrittmotor und der davon angetriebenen Rotationsscheibe 16 hergestellt wird. Ebenfalls am Umfang 27 der Rotationsscheibe 16 ist eine erste Ausfräsung 23 (Fig.8) vorgesehen, die eine geschwungene Steuerkante 29 bildet und sich über die gesamte Höhe der Rotationsscheibe 16 erstreckt. Fig.5 zeigt die auf den Ventilblock 11 aufgesetzte, transparent dargestellte Rotationsscheibe 16 in ihrer Stellung zu Beginn der Evakuierungsphase 31. Hierbei überdeckt die Rotationsscheibe 16 die nierenförmige Ventilbohrung 15 (Fig.7) des Ventilblockes 11 vollständig. Durch Drehung der Rotationsscheibe 16 im Uhrzeigersinn wird eine kontrollierte Evakuierung des Melkzeuges in Abhängigkeit von der Drehgeschwindigkeit durchgeführt. Die Luft fliesst dabei in Pfeilrichtung 35 von der sukzessive freigegebenen, nierenförmigen Ventilbohrung 15 im Ventilkörper 11 über den durch die unterseitige Ausbuchtung 24 in der Rotationsscheibe 16 gebildeten Verbindungskanal 17, weiter durch die Verbindungsbohrung 70 in den zweiten Anschlussstutzen 14 im Ventilkörper 11 und von dort zur Vakuumversorgung (Puffertank).

Die Rotationsscheibe 16 wird zunächst im Uhrzeigersinn nur soweit gedreht, bis die unterseitige Ausbuchtung 24 wenige Zehntelmillimeter über die nierenförmige Ventilbohrung 15 verfahren ist. Durch die entstandene Spaltöffnung 25 findet in der Pulsatorvorrichtung 10 ein anfänglich energiearmer Druckausgleich ohne störende Turbulenzbildung statt. Korrelierend mit der Verminderung des Druckgefälles wird die Spaltöffnung 25 erweitert, sodass damit der Verlauf der Pulskurve 30 einem vorgegebenen Profil (vgl. Fig.1) folgt. Unterstützt wird dies durch die nierenförmige Ventilbohrung 15 im Ventilblock 11 und dem geringen Radius zum Zentrum 70 des Ventilblockes 11. Diese Konstruktion ermöglicht es, die Position der Rotationsscheibe 16 bzw. die durchströmte Fläche fast linear zu verändern. Je nach Verlauf der Pulskurve 30 kann die Position der Rotationsscheibe 16 eine bestimmte Dauer verweilen. Die positive Überdeckung am Beginn der Evakuierungsphase 32 ergibt sich aufgrund des Abstandes zwischen dem Seitenrand 52 der nierenförmigen Ventilbohrung 15 und dem Rand 53 der geschwungenen Steuerkante 29. Die Frischluftzufuhr ist dabei vollständig geschlossen.

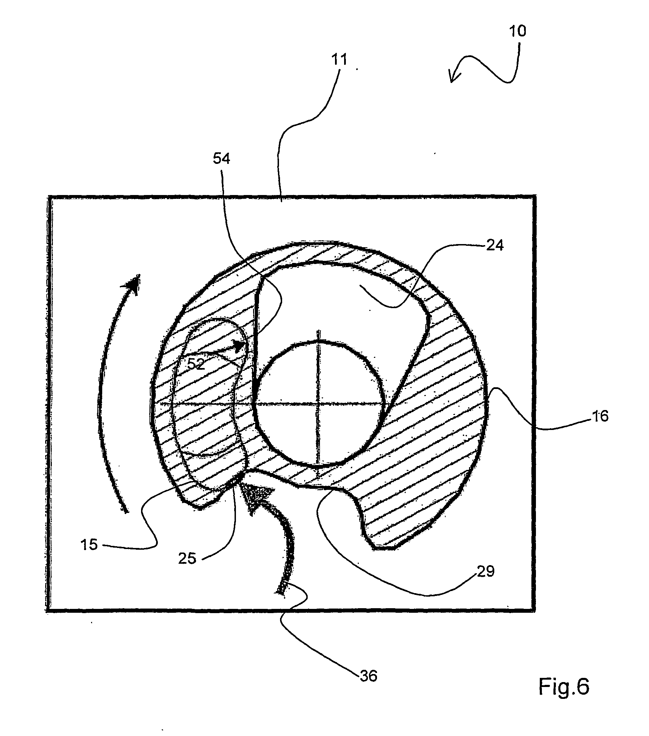

Fig.6 zeigt eine weitere Stellung der Rotationsscheibe 16 am Beginn der Belüftungsphase 34. Diese Stellung wird nach fortgesetzter Drehung der Rotationsscheibe 16 im Uhrzeigersinn erreicht. Noch ist die nierenförmige Ventilbohrung 15 im Ventilblock 11 von der Rotationsscheibe 16 überdeckt. Nach weitergehender Drehung gibt die randseitig an der Rotationsscheibe 16 angeordnete, geschwungene Steuerkante 29 wenige Zehntelmillimeter der nierenförmigen Ventilbohrung 15 frei und bewirkt somit eine Verbindung zwischen Frischlufteinlass und der nierenförmigen Ventilbohrung 15 im Ventilkörper 11. Durch die entstandene Spaltöffnung 25 dringt Umgebungsluft in Pfeilrichtung 36 ein und es findet ein anfänglich energiearmer Druckausgleich ohne störende Turbulenzbildung statt. Korrelierend mit der Verminderung des Druckgefälles wird die Spaltöffnung 25 erweitert, sodass der Verlauf der Pulskurve 30 einem vorgegebenen Profil (vgl. Fig.1) folgt. Es erfolgt somit ein Abbau der anliegenden Vakuumbeaufschlagung und eine gesteuerte Belüftung des Melkzeuges. Auch hier kommt es wiederum zu einer positiven Überdeckung, da eingangs der Belüftungsphase 34 die Vakuumzufuhr aufgrund des Abstandes zwischen dem Seitenrand 52 der nierenförmigen Ventilbohrung 15 und dem dieser am nächstliegenden Ausbuchtungsrand 54 bereits geschlossen ist.

Fig.7 zeigt eine Ausführungsform des erfindungsgemässen Ventilblockes 11. Dieser ist hierbei ohne eine auf seiner Oberseite 12 aufgesetzte Rotationsscheibe 16 in Draufsicht dargestellt. Der Ventilblock 11 weist eine zentrale Bohrung 70 auf, die in den ersten Anschlussstutzen 14 mündet. Am Ventilblock 11 ist eine nierenförmige Ventilbohrung 15 polar zur zentralen Bohrung 70 angeordnet, die sich trichterförmig in den Ventilblock 11 erstreckt. Die nierenförmige Ventilbohrung 15 mündet in einen ersten Anschlussstutzen 13 für den Pulsschlauch unterseits des Ventilblockes 11. Durch die nierenförmige Ventilbohrung 15 fliesst bei einer durch entsprechende Drehung der Rotationsscheibe 16 durchgeführter Vakuumbeaufschlagung der Pulsatorvorrichtung 10 Luft vom Melkzeug ab bzw. bei Frischluftbeaufschlagung der Pulsatorvorrichtung 10 Luft zum Melkzeug hin.

Fig. 8 und 9 zeigen bevorzugte Ausführungsformen einer Rotationsscheibe 16 zur Verwendung in der erfindungsgemässen Pulsatorvorrichtung 10. In Fig. 8 wird die Rotationsscheibe 16 in Untersicht dargestellt. Die in Fig. 8 gezeigte Unterseite 72 liegt beim Betrieb der Rotationsscheibe 16 auf dem Ventilblock 11 auf und dient zur Trennung bzw. dem Anschluss des Melkzeuges von der Vakuum- bzw. Frischluftzufuhr.

Die Rotationsscheibe 16 verfügt an ihrem Umfang 27 über eine Ausfräsung 23, die eine geschwungene Steuerkante 29 bildet. In der Drehrichtung von der Ausfräsung 23 beabstandet weist die Rotationsscheibe 16 auf ihrer dem Ventilblock zugewandten Unterseite 72 eine Ausbuchtung 24 auf, welche sich vom Zentrum 80 aus glockenförmig erweiternd in Richtung des Umfanges 27 erstreckt. Diese Ausbuchtung 24 weist einen entsprechend der Auslegung der Melkvorrichtung abgestimmt dimensionierten Querschnitt auf und ist allseits abgerundet, wodurch Turbulenzen in der Luftströmung möglichst gering gehalten werden.

Fig.9 zeigt die Rotationsscheibe 16 in Draufsicht, die mit den Antriebsmitteln in Verbindung steht. Die Rotationsscheibe 16 weist in ihrer Oberfläche 71 eine runde, zentral angeordnete Ausnehmung 18 zur Zentrierung eines Drehachsenmittelpunktes auf. Am Umfang 27 der Rotationsscheibe 16 sind drei polar und gleichmässig verteilte Nuten 19a,b,c angeordnet, in die Klauen einer Klauenkupplung eingreifen und mittels derer eine drehfeste Verbindung zwischen dem am Gehäuse angeordneten, in Fig.8 und 9 jedoch nicht dargestellten Schrittmotor und der davon angetriebenen Rotationsscheibe 16 hergestellt wird. Anstelle der Nuten 19a,b,c können auch korrespondierend geformte Stege in Art einer Nut-Feder-Verbindung vorgesehen sein.

Die in den Fig.8 und 9 dargestellte Rotationsscheibe 16 verfügt zusätzlich über eine am Umfang 27 angeordnete Erkennungsfahne 20. Über einen am Gehäuse der Pulsatorvorrichtung 10 angeordneten Sensor kann darüber die aktuelle Winkelposition der Rotationsscheibe 16 abgelesen werden. Dies kann vorzugsweise mit magnetischen Messwertgebern erfolgen.

Durch die gezeigten Ausführungsformen der Erfindung kann ein kontinuierlicher Beginn der Evakuierungs- 32 und der Belüftungsphase 34 erreicht werden. Vor dem Start der jeweiligen Phase herrscht an der nierenförmigen Ventilbohrung 15 immer der höchste Differenzdruck. Es handelt sich auf der Umgebungsseite um den variablen Luftdruck (bestimmt durch die Höhe über NN) und auf der anderen Seite um das anliegende Betriebsvakuum, wobei hier die Vakuumhöhe eine betriebs- bzw. tier- oder melksystembezogene Variable darstellt und stets relativ zum aktuellen Luftdruck zu sehen ist.

## Patentansprüche

1. Pulsatorvorrichtung für Melkmaschinen, umfassend:
wenigstens einen ersten Einlass für ein Vakuum,
wenigstens einen zweiten Einlass für Umgebungsluft,
wenigstens einen Auslass,
wenigstens einen Schrittmotor,
eine Steuervorrichtung mit einem Ventilblock (11) und wenigstens einer Rotationsscheibe (16) mit einer ersten Ausnehmung zur Freigabe des Einlasses und einer zweiten am Umfang (27) der Rotationsscheibe (16) angeordneten, eine Steuerkante bildenden Ausfräsung (23) zur Freigabe des Auslasses,
**dadurch gekennzeichnet, dass**
die erste Ausnehmung als Ausbuchtung (24) in der Rotationsscheibe (16) ausgebildet und die Ausfräsung (23) in Drehrichtung von der Ausbuchtung (24) beabstandet angeordnet und polar um das Zentrum (80) geschwungen, insbesondere nierenförmig ausgebildet ist, und dass am Ventilblock (11) eine Ventilbohrung (15) vorgesehen ist, die polar um das Zentrum (80) geschwungen, insbesondere nierenförmig ausgebildet ist und wobei die Ausbuchtung (24) bzw. die Ausfräsung (23) mit der Ventilbohrung (15) in Wirkbeziehung bringbar sind.

2. Pulsatorvorrichtung nach Anspruch 1, **dadurch gekennzeichnet, dass** der erste und/oder zweite Einlass und/oder der Auslass im wesentlichen senkrecht zur Drehrichtung angeordnet sind.

3. Pulsatorvorrichtung nach Anspruch 1 oder 2, **dadurch gekennzeichnet, dass** eine Vorrichtung (20) zur Ermittlung der Winkelstellung der Rotationsscheibe (16) vorgesehen ist.

4. Pulsatorvorrichtung nach Anspruch 3, **dadurch gekennzeichnet, dass** die Vorrichtung (20) zur Ermittlung der Winkelstellung an und/oder in der Rotationsscheibe (16) angeordnet ist.

5. Pulsatorvorrichtung nach einem der vorhergehenden Ansprüche, **dadurch gekennzeichnet, dass** die Steuervorrichtung wenigstens ein Programm zur Steuerung der Rotationsscheibe (16) aufweist.

6. Pulsatorvorrichtung nach einem der vorhergehenden Ansprüche, **dadurch gekennzeichnet, dass** zur Kopplung des Schrittmotors an der Rotationsscheibe (16) eine Klauenkupplung vorgesehen ist.

7. Pulsatorvorrichtung nach Anspruch 6, **dadurch gekennzeichnet, dass** der Angriffspunkt (19a, b, c) der Klauenkupplung nahe am Umfang (27) der Rotationsscheibe (16) angeordnet ist.

8. Pulsatorvorrichtung nach einem der vorhergehenden Ansprüche, **dadurch gekennzeichnet, dass**
zusätzlich eine Messvorrichtung für das Pulsvakuum vorgesehen ist.

9. Pulsatorvorrichtung nach einem der vorhergehenden Ansprüche, **dadurch gekennzeichnet, dass**
eine Rotationsscheibenstellung zur Drucklosmachung der Pulsatorvorrichtung vorgesehen ist.

10. Pulsatorvorrichtung nach einem der vorhergehenden Ansprüche, **dadurch gekennzeichnet, dass**
die Pulsatorvorrichtung (10) in einem Puffertank angeordnet ist.

11. Pulsatorvorrichtung nach einem der vorhergehenden Ansprüche,
**dadurch gekennzeichnet, dass**
die Rotationsscheibe (16) und/oder die Oberfläche (12) des Ventilblockes (11) aus reibungsarmem Kunststoff und/oder Keramik besteht.

12. Pulsatorvorrichtung nach einem der vorhergehenden Ansprüche,
**dadurch gekennzeichnet, dass**
mehrere Pulsatorvorrichtungen (10) in einem Gehäuse angeordnet sind.

13. Pulsatorvorrichtung nach Anspruch 12, **dadurch gekennzeichnet, dass** die Pulsatorvorrichtungen (10) voneinander unabhängig steuerbar ausgebildet sind.

14. Melkverfahren, gesteuert durch eine Pulsatorvorrichtung nach einem der vorhergehenden Ansprüche,
umfassend eine Evakuierungsphase (32),
eine Plateauphase (33), und
eine Belüftungsphase (34),
eine Druck- bzw. Massagephase,
**dadurch gekennzeichnet, dass**
durch Zusammenwirken einer Ventilbohrung (15) des Ventilblocks (11) mit der ersten Ausnehmung am Beginn der Evakuierungsphase (32) die Beschleunigung der Vakuumzunahme geringer als 1000 kPa/s² ist, und durch Zusammenwirken der Ventilbohrung (15) des Ventilblocks (11) mit der Ausfräsung (23) am Beginn der Belüftungsphase (34) die Beschleunigung des Vakuumäbbaues geringer als 1000 kPa/s² ist.

15. Melkverfahren nach Anspruch 14, **dadurch gekennzeichnet, dass** die Vakuumzunahme während der Evakuierungsphase (32) und
der Vakuumabbau während der Belüftungsphase (34) frei von Oberwellen gehalten wird.

16. Melkverfahren nach Anspruch 14 oder 15, **dadurch gekennzeichnet, dass** die Evakuierungsphase (32) erst nach vollständigem Abschluss der Umgebungsluftzufuhr und/oder die Belüftungsphase (34) erst nach vollständigem Abschluss der Vakuumzufuhr einsetzt.

17. Melkverfahren nach einem der Ansprüche 14 bis 16, **dadurch gekennzeichnet, dass** die Steuerung des Phasenverlaufs der Evakuierungsphase (32) und/oder der Belüftungsphase (34) durch oszillierende Bewegung der Rotationsscheibe (16) erfolgt.

18. Melkverfahren nach Anspruch 17, **dadurch gekennzeichnet, dass** die Steuerung des Phasenverlaufs durch die Steuervorrichtung erfolgt.

19. Melkverfahren nach Anspruch 17 oder 18, **dadurch gekennzeichnet, dass** die Steuerung des Phasenverlaufs in Anpassung an kontinuierlich ermittelte oder übermittelte Parameter erfolgt.

20. Melkverfahren nach Anspruch 17, **dadurch gekennzeichnet, dass** die Belüftungsphase (34) abgebrochen und der Massagedruck auf einem bestimmten Niveau stabil gehalten wird.

21. Melkverfahren nach Anspruch 19, **dadurch gekennzeichnet, dass** die Steuerung des Pulsators das Erreichen von Melkende jeder einzelnen Zitze bzw. der Euterhälften optisch mittels Signallampe und/oder mittels Steuersignal aufzeigt.

## Claims

1. Pulsator device for milking machines, comprising
at least one first inlet for a vacuum,
at least one second inlet for ambient air,
at least one outlet,
at least one stepper motor,
a control device with a valve block (11) and at least one rotary disc (16) with a first recess for opening the inlet and a second milled section (23) arranged at the circumference (27) of the rotary disc (16) and forming a control edge for opening the outlet,
**characterised in that**
the first recess is designed as a cavity (24) in the rotary disc (16) and the milled section (23) is spaced from the indentation (24) in the direction of rotation and is curved in a polar manner around the centre (80), and is preferably designed in a kidney-shaped manner, and that a core chamber (15) is provided in the valve block (11), which core chamber is curved in a polar manner around the centre (80), and is preferably designed in a kidney-shaped manner and where the cavity (24) or the milled section (23) respectively can interact with the core chamber (15).

2. Pulsator device according to claim 1,
**characterised in that**
the first and/or second inlet and/or outlet is essentially arranged vertical to the direction of rotation.

3. Pulsator device according to claim 1 or 2,
**characterised in that**
a device (20) is provided for determining the angular position of the rotary disc (16).

4. Pulsator device according to claim 3,
**characterised in that**
the device (20) for determining the angular position is arranged on and/or in the rotary disc (16).

5. Pulsator device according to one of the preceding claims,
**characterised in that**
the control device has at least one program for controlling the rotary disc (16).

6. Pulsator device according to one of the preceding claims, **characterised in that**
a claw coupling is provided on the rotary disc (16) for coupling with the stepper motor.

7. Pulsator device according to claim 6,
**characterised in that**
the catching point (19a, b, c) of the claw coupling is arranged close to the circumference (27) of the rotary disc (16).

8. Pulsator device according to one of the preceding claims,
**characterised in that**
a measuring device is additionally provided for the pulsation vacuum.

9. Pulsator device according to one of the preceding claims,
**characterised in that**
a rotary disc position is provided for rendering the pulsator device pressure-free.

10. Pulsator device according to one of the preceding claims,
**characterised in that**
the pulsator device (10) is arranged in a buffer tank.

11. Pulsator device according to one of the preceding claims,
**characterised in that**
the rotary disc (16) and/or the surface (12) of the valve block (11) is made of low-friction plastic and/or ceramic.

12. Pulsator device according to one of the preceding claims,
**characterised in that**
several pulsator devices (10) are arranged in a housing.

13. Pulsator device according to claim 12,
**characterised in that**
the pulsator devices (10) are designed to be controllable separately from each other.

14. Milking process, controlled by a pulsator device according to one of the preceding claims,
comprising an evacuation phase (32),
a plateau phase (33), and
a ventilation phase (34),
a pressure or massage phase respectively,
**characterised in that**
at the start of the evacuation phase (32), the acceleration of the increase in vacuum is less than 1,000 kPa/s² due to the interaction of a core chamber (15) of the valve block (11) with the first recess, and at the beginning of the ventilation phase (34), the acceleration of the decrease in vacuum is less than 1000 kPa/s² at the start of the ventilation phase (34) due to the interaction of the core chamber (15) of the valve block (11) with the milled section (23).

15. Milking process according to claim 14,
**characterised in that**
the increase in vacuum during the evacuation phase (32) and the decrease in vacuum during the ventilation phase (34) is kept free from harmonic waves.

16. Milking process according to claim 14 or 15,
**characterised in that**
the evacuation phase (32) only starts after completion of the supply of ambient air and/or the ventilation phase (34) only starts after completion of the supply of the vacuum.

17. Milking process according to one of claims 14 to 16,
**characterised in that**
the phase course of the evacuation phase (32) and/or the ventilation phase (34) is controlled by the oscillating movement of the rotary disc (16).

18. Milking process according to claim 17,
**characterised in that**
the phase course is controlled by the control device.

19. Milking process according to claim 17 or 18,
**characterised in that**
the phase course is controlled in line with continually recorded or transmitted parameters.

20. Milking process according to claim 17,
**characterised in that**
the ventilation phase (34) is terminated and the massage pressure is maintained stable at a specific level.

21. Milking process according to claim 19,
**characterised in that**
the pulsator control device visually displays the end of the milking of each teat or of the udder halves respectively by means of a signal lamp and/or by means of a control signal.

## Revendications

1. Dispositif pulsateur pour machines à traire, comprenant :
au moins une première entrée pour un vide,
au moins une seconde entrée pour de l'air ambiant,
au moins une sortie,
au moins un moteur pas à pas,
un dispositif de commande avec un bloc de soupapes (11) et au moins un disque rotatif (16) avec un premier creux pour le déblocage de l'entrée et un second évidement fraisé (23) disposé à la circonférence (27) du disque rotatif (16), formant une came de commande pour le déblocage de la sortie,
**caractérisé en ce que**
le premier creux est formé en tant que cavité (24) dans le disque rotatif (16) et l'évidement fraisé (23) est disposé espacé de la cavité (24) dans le sens de rotation et est formé incurvé de manière polaire autour du centre (80), en particulier réniforme, et **en ce qu'**un trou de soupape (15) est prévu sur le bloc de soupapes (11), qui est formé incurvé de manière polaire autour du centre (80), en particulier réniforme, et dans lequel la cavité (24), respectivement l'évidement fraisé (23), peuvent être amenés en relation opérationnelle avec le trou de soupape (15).

2. Dispositif pulsateur selon la revendication 1,
**caractérisé en ce que**
la première et/ou seconde entrée(s) et/ou la sortie sont disposées essentiellement perpendiculairement au sens de rotation.

3. Dispositif pulsateur selon la revendication 1 ou 2,
**caractérisé en ce qu'**
un dispositif (20) pour déterminer la position angulaire du disque rotatif (16) est prévu.

4. Dispositif pulsateur selon la revendication 3,
**caractérisé en ce qu'**
un dispositif (20) pour déterminer la position angulaire sur et/ou dans le disque rotatif (16) est prévu.

5. Dispositif pulsateur selon l'une des revendications précédentes,
**caractérisé en ce que**
le dispositif de commande présente au moins un programme pour la commande du disque rotatif (16).

6. Dispositif pulsateur selon l'une des revendications précédentes,
**caractérisé en ce qu'**
un accouplement à griffes est prévu pour le couplage du moteur pas à pas au disque rotatif (16).

7. Dispositif pulsateur selon la revendication 6,
**caractérisé en ce que**
le point de prise (19a, b, c) de l'accouplement à griffes est disposé près de la circonférence (27) du disque rotatif (16).

8. Dispositif pulsateur selon l'une des revendications précédentes,
**caractérisé en ce qu'**
un dispositif de mesure est prévu en outre pour le vide pulsé.

9. Dispositif pulsateur selon l'une des revendications précédentes,
**caractérisé en ce qu'**
une position de disque rotatif est prévue pour la mise hors pression du dispositif pulsateur.

10. Dispositif pulsateur selon l'une des revendications précédentes,
**caractérisé en ce que**
le dispositif pulsateur (10) est disposé dans un réservoir tampon.

11. Dispositif pulsateur selon l'une des revendications précédentes,
**caractérisé en ce que**
le disque rotatif (16) et/ou la surface (12) du bloc de soupapes (11) est/sont composé(e)(s) de matière plastique à frottement réduit et/ou de céramique.

12. Dispositif pulsateur selon l'une des revendications précédentes,
**caractérisé en ce que**
plusieurs dispositifs pulsateurs (10) sont disposés dans un boîtier.

13. Dispositif pulsateur selon la revendication 12,
**caractérisé en ce que**
les dispositifs pulsateurs (10) sont formés de manière à pouvoir être commandés indépendamment les uns des autres.

14. Procédé de traite, commandé par un dispositif pulsateur selon l'une des revendications précédentes,
comprenant une phase d'évacuation (32),
une phase de plateau (33), et
une phase d'aération (34),
une phase de pression, respectivement de massage,
**caractérisé en ce que**
par la coopération d'un trou de soupape (15) du bloc de soupapes (11) avec le premier creux au début de la phase d'évacuation (32), l'accélération de l'augmentation du vide est inférieure à 1000 kPa/s², et par la coopération du trou de soupape (15) du bloc de soupapes (11) avec l'évidement fraisé (23) au début de la phase d'aération (34), l'accélération de la diminution du vide est inférieure à 1000 kPa/s².

15. Procédé de traite selon la revendication 14,
**caractérisé en ce que**
l'augmentation du vide pendant la phase d'évacuation (32) et la diminution du vide pendant la phase d'aération (34) sont maintenues exemptes d'harmonique.

16. Procédé de traite selon la revendication 14 ou 15,
**caractérisé en ce que**
la phase d'évacuation (32) commence uniquement après l'achèvement complet de l'alimentation d'air ambiant et/ou la phase d'aération (34) commence uniquement après l'achèvement complet de l'alimentation du vide.

17. Procédé de traite selon l'une des revendications 14 à 16,
**caractérisé en ce que**
la commande du déroulement de phase de la phase d'évacuation (32) et/ou de la phase d'aération (34) est effectuée par mouvement oscillatoire du disque rotatif (16).

18. Procédé de traite selon la revendication 17,
**caractérisé en ce que**
la commande du déroulement de phase est effectuée par le dispositif de commande.

19. Procédé de traite selon la revendication 17 ou 18,
**caractérisé en ce que**
la commande du déroulement de phase est effectuée en s'adaptant à des paramètres déterminés ou transmis en continu.

20. Procédé de traite selon la revendication 17,
**caractérisé en ce que**
la phase d'aération (34) est interrompue et la pression de massage est maintenue stable à un niveau déterminé.

21. Procédé de traite selon la revendication 19,
**caractérisé en ce que**
la commande du pulsateur indique que la fin de la traite est atteinte pour chaque trayon, respectivement demi-mamelle, de manière optique au moyen d'une lampe témoin et/ou au moyen d'un signal de commande.
